# EUROPEAN PATENT APPLICATION

(11) **EP 3 584 686 A1**
(43) Date of publication of application: **25.12.2019**
(21) Application number: 17863303.8
(22) Date of filing: 13.10.2017
(51) Int. Cl.: G06F 3/041

(54) **FORCE TOUCH DETECTION METHOD, TOUCH PANEL, AND ELECTRONIC DEVICE**

(30) Priority: 17.02.2017 CN 201710086641
(71) Applicant: BOE Technology Group Co., Ltd., Beijing 100015 (CN); Chengdu BOE Optoelectronics Technology Co., Ltd., Chengdu, Sichuan 611731 (CN)
(72) Inventor: HUANG, Weiyun, Beijing 100176 (CN); ZANG, Pengcheng, Beijing 100176 (CN); GAO, Shan, Beijing 100176 (CN)
(74) Representative: Klunker IP Patentanwälte PartG mbB
(86) International application number: PCT/CN2017/106092
(87) International publication number: WO 2018/149159

(57) **Abstract**

A force touch detection method, a touch panel and an electronic device are provided. The force touch detection method includes: providing a touch detection unit array (100), which includes touch detection units arranged in multiple lines and multiple columns; detecting touch areas when the touch detection unit array (100) is touched, and outputting different touch force signals according to the touch areas. The force touch detection method integrates a force touch function in a touch panel, utilizes a phenomenon that touch area changes when different force touch operations are performed, and uses a size of the touch area to characterize a magnitude of touch force to implement a force touch detection, thereby eliminating the need for an additional force sensor, simplifying the preparation process of the force touch panel, improving the yield of the product, reducing the production cost of the force touch panel and realizing the lightness and thinness of the electronic device.

## Description

The present application claims priority of China Patent application No. 201710086641.7 filed on February 17, 2017, the content of which is incorporated in its entirety as portion of the present application by reference herein.

### TECHNICAL FIELD

Embodiments of the present disclosure relate to a force touch detection method, a touch panel and an electronic device.

### BACKGROUND

As a new human-computer interaction device, a touch screen is widely used in various electronic devices such as a smart phone, a tablet, a television and the like because the touch screen has characteristics such as directness, high efficiency, accuracy, smoothness and fashion. With the development of a touch screen technology, a force touch technology is introduced into a traditional touch technology, a third-dimensional force space is added on the touch screen on the basis of a two-dimensional plane space to achieve a 3D touch effect, so as to enrich the human-computer interaction means, achieve more functions and bring more diversified operation experience.

An electronic device having a force touch function is capable of generating different sensing signals according to different force levels so as to perform corresponding operation instructions. According to different principles of force sensing, the manners to implement a force touch function on the electronic device can be mainly divided into three categories: a piezoelectric type, a piezoresistive type, and a capacitance type. The force touch technology in the capacitance type operates based on a principle that the size of capacitance changes with the magnitude of force, the force touch technology in the piezoresistive type operates based on a principle that resistance of a piezoresistor changes with the magnitude of force, the force touch technology in the piezoelectric type operates based on a principle of a piezoelectric effect of some crystal materials. For the piezoelectric type, the piezoresistive type, or the capacitance type force touch technology, a force sensing component including a force sensor and a driver chip thereof, and a peripheral circuit and the like needs to be added to achieve the force detection, thereby resulting that a structure of the electronic device is complicated and the production cost is high; on the other hand, because the force sensing component needs to be integrated in the touch screen, the thickness of the touch screen may increase, which is not conducive to the lightness and thinness of the electronic device.

### SUMMARY

At least one embodiment of the present disclosure provides a force touch detection method, which includes: providing a touch detection unit array, which includes touch detection units arranged in multiple lines and multiple columns; detecting touch areas when the touch detection unit array is touched, and outputting different touch force signals according to the touch areas.

For example, in the force touch detection method provided by an embodiment of the present disclosure, the touch detection units are capacitance touch detection units, the capacitance touch detection units generate touch capacitance data when the capacitance touch detection units are touched. The method includes: determining a feature parameter of a three-dimensional waveform of the touch capacitance data, the touch areas being characterized by the feature parameter, the feature parameter comprising at least one of a waveform full width at half maximum, a waveform horizontal section area, a waveform peak value, a waveform width and waveform integral of the three-dimensional waveform.

For example, the force touch detection method provided by an embodiment of the present disclosure further includes: taking a touch area of a first touch operation as touch characteristic data, detecting a touch area of a current touch operation and comparing the touch area of the current touch operation with the touch characteristic data, determining a type of the current touch operation according to a comparison result, and outputting a touch force signal corresponding to the type of the current touch operation in the different touch force signals.

For example, the force touch detection method provided by an embodiment of the present disclosure further includes: storing touch areas when a user lightly touches, lightly presses and heavily presses the touch detection unit array, respectively, as touch characteristic data, detecting a touch area of a current touch operation and comparing the touch area of the current touch operation with the touch characteristic data, determining a type of the current touch operation according to a comparison result, outputting a touch force signal corresponding to the type of the current touch operation in the different touch force signals.

For example, in the force touch detection method provided by an embodiment of the present disclosure, the type of the current touch operation includes a light touch operation, a light press touch operation and a heavy press touch operation.

At least one embodiment of the present disclosure further provides a touch panel, which includes: a touch detection unit array, which includes touch detection units arranged in multiple lines and multiple columns; a touch processing device, configured to detect touch areas when the touch detection unit array is in a touched state, and output different touch force signals according to the touch areas.

For example, in the touch panel provided by an embodiment of the present disclosure, the touch detection units are self-capacitance touch detection units or mutual capacitance touch detection units.

For example, in the touch panel provided by an embodiment of the present disclosure, the touch detection units are configured to generate touch capacitance data. A feature parameter of a three-dimensional waveform of the touch capacitance data is used to characterize the touch areas, and the feature parameter includes at least one of a waveform full width at half maximum, a waveform horizontal section area, a waveform peak value, a waveform width and waveform integral of the three-dimensional waveform.

For example, the touch panel provided by an embodiment of the present disclosure further includes a storage device, and the storage device is configured to store touch characteristic data.

For example, in the touch panel provided by an embodiment of the present disclosure, the touch characteristic data is a touch area in a case of a first touch operation, the touch processing device is further configured to detect a touch area of a current touch operation, compare the touch area of the current touch operation with the touch characteristic data, determine a type of the current touch operation according to a comparison result, and output a touch force signal corresponding to the type of the current touch operation in the different touch force signals.

For example, in the touch panel provided by an embodiment of the present disclosure, the touch characteristic data is touch areas when a user lightly touches, lightly presses and heavily presses the touch detection unit array, respectively, the touch processing device is further configured to detect a touch area of a current touch operation, compare the touch area of the current touch operation with the touch characteristic data, determine a type of the current touch operation according to a comparison result, and output a touch force signal corresponding to the type of the current touch operation in the different touch force signals.

For example, at least one embodiment of the present disclosure further provides an electronic device, which includes the touch panel described in any one of the above embodiments.

For example, the electronic device provided by an embodiment of the present disclosure, further includes a display panel, the touch panel is disposed on a display side of the display panel; or the touch panel is formed integrally with the display panel.

### BRIEF DESCRIPTION OF THE DRAWINGS

In order to clearly illustrate the technical solution of embodiments of the present disclosure, the drawings of the embodiments will be briefly described in the following, it is obvious that the drawings in the description are only related to some embodiments of the present disclosure and not limited to the present disclosure.
Fig. 1a is a view of a relationship between touch force and a touch area;
Fig. 1b is a view of another relationship between touch force and a touch area;
Fig. 2a is a flow chart of a force touch detection method provided by an embodiment of the present disclosure;
Fig. 2b is a flow chart of a step S02 in Fig. 2a;
Fig. 3a is a view of a three-dimensional waveform of touch capacitance data;
Fig. 3b to Fig. 3c are views of a feature parameter of a three-dimensional waveform provided by an embodiment of the present disclosure;
Fig. 3d is a view of a horizontal section of the three-dimensional waveform in a line A-A' direction in Fig. 3c;
Fig. 4a to Fig. 4b are flow charts of a force touch detection method provided by an embodiment of the present disclosure;
Fig. 5a to Fig. 5b are flow charts of a force touch detection method provided by another embodiment of the present disclosure;
Fig. 6 is a block diagram of a touch panel provided by an embodiment of the present disclosure; and
Fig. 7 is a block diagram of an electronic device provided by an embodiment of the present disclosure.

### DETAILED DESCRIPTION

In order to make objects, technical details and advantages of the embodiments of the present disclosure apparently, the technical solutions of the embodiments will be described in a clearly and fully understandable way in connection with the drawings related to the embodiments of the present disclosure. It is obvious that the described embodiments are just a part but not all of the embodiments of the present disclosure. Based on the described embodiments herein, a person having ordinary skill in the art may obtain other embodiment(s), without any inventive work, which should be within the scope of the disclosure.

Unless otherwise defined, the technical terms or scientific terms used herein have the same meanings as commonly understood by one of ordinary skill in the art to which the present disclosure belongs. The terms "first", "second", etc., which are used in the description and the claims of the present disclosure, are not intended to characterize any sequence, amount or importance, but distinguish various components. The terms "includes", "comprising", etc., are intended to specify that the elements or the objects stated before these terms encompass the elements or the objects and equivalents thereof listed after these terms, but do not preclude the other elements or objects.

In order to make the following description of the embodiments of the present disclosure apparently and concisely, the present disclosure omits a detailed description of known function(s) and known component(s).

At least one embodiment of the present disclosure provides a force touch detection method, a touch panel and an electronic device. At least one embodiment of the present disclosure integrates a force touch function in a touch panel, utilizes a phenomenon that a touch area changes when touch operations with different force level are performed, and uses a size of the touch area to characterize a magnitude of touch force to implement a force touch detection, thereby eliminating the need for an additional force sensor, simplifying the preparation process of the force touch panel, improving the yield of the product, reducing the production cost of the force touch technology and realizing the lightness and thinness of the electronic device.

It should be noted that, in the following descriptions of the embodiments of the present disclosure, the first touch force is less than the second force which is taken as an example to describe the present disclosure.

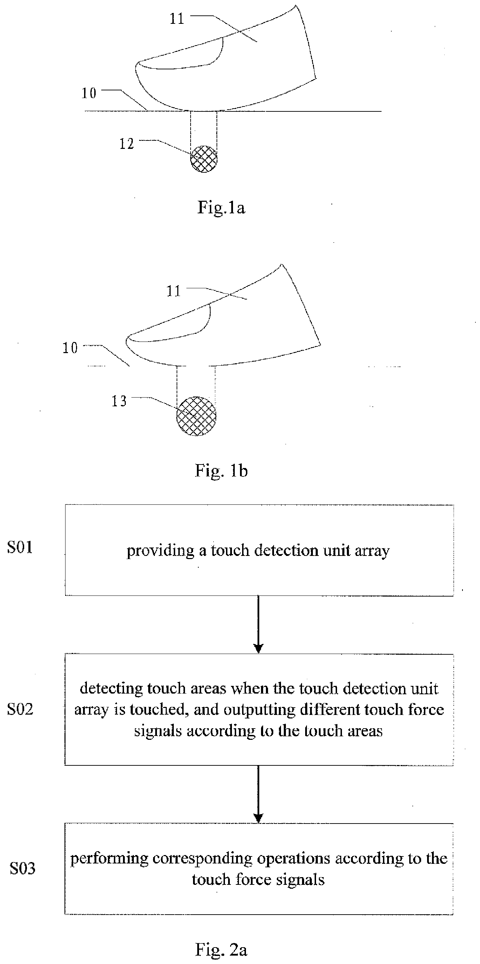

Fig. 1a to Fig. 1b illustrate views of a relationship between touch force and a touch area when a touch operation is performed by a finger.

When a finger of a user initially contacts with a touch screen, a touch area between the finger and the touch screen is the smallest, as the finger continues to apply force, the touch area between the finger and the touch screen continues to increase. The touch force applied to the touch screen by the finger is different, thus the touch area between the finger and the touch screen is different. As illustrated in Fig. 1a, under the first touch force, a first touch area 12 is formed between the finger 11 and the touch screen 10; as illustrated in Fig. 1b, under the second touch force, a second touch area 13 is formed between the finger 11 and the touch screen 10, and the first touch area 12 is less than the second touch area 13. The size of the touch area is positively correlated with the magnitude of the touch force, when the touch force is larger, the touch area is also larger, so that the size of the touch area can be used to characterize the magnitude of the touch force. By detecting the touch area, touch force signals are generated, and the touch force signals can be provided to, for example, an operation system to perform corresponding force touch operations to achieve a force touch technology.

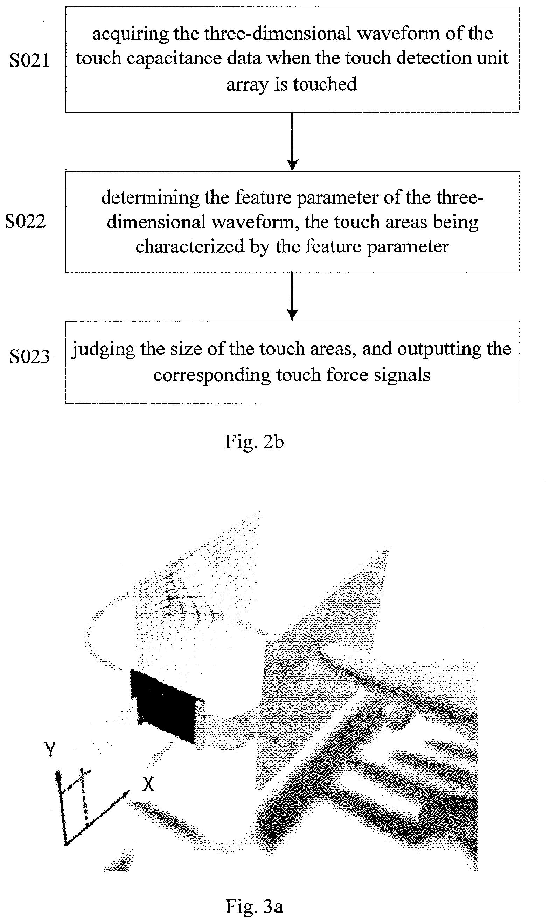

Fig. 2a illustrates a flow chart of a force touch detection method provided by an embodiment of the present disclosure, and Fig. 2b illustrates a flow chart of a step S02 in Fig. 2a.

As illustrated in Fig. 2a, the force touch detection method provided by an embodiment of the present disclosure can include:
Step S01: providing a touch detection unit array.
Step S02: detecting touch areas when the touch detection unit array is touched, and outputting different touch force signals according to the touch areas.
Step S03: performing corresponding operations according to the touch force signals.

The force touch detection method provided by an embodiment of the present disclosure utilizes the size of the touch area when the touch panel is touched by such as a finger to characterize the magnitude of the touch force and generate different touch force signals so as to perform different touch functions. Thus, the need for an additional force sensor is eliminated, the preparation process of the force touch panel is simplified, the yield of the product is improved, the production cost of the force touch panel is reduced, and the lightness and thinness of the electronic device are achieved.

For example, the touch detection unit array includes touch detection units arranged in multiple lines and multiple columns, the touch detection units are arranged adjacent to each other; according to resolution of a touch panel, each of the touch detection units can occupy a small area, and a plurality of touch detection units occupy a large area. For example, the touch area can be characterized by the number of the touch detection units which are touched. Or, when the touch detection units are capacitance touch detection units, the touch area can be characterized by a size of the capacitance generated by the touch detection units which are touched. For example, the capacitance generated by one of the touch detection units when it is fully touched is greater than that when it is partially touched; for another example, when one of the touch detection units is touched, the capacitance generated under the first touch force is less than the capacitance generated under the second touch force, the size of the capacitance is proportional to the magnitude of the touch force. The touch detection unit array can have a plurality of implementation manners, and embodiments of the present disclosure are not limited to the specific implementation manners. For example, the touch detection unit array can be a mutual capacitance touch detection unit array or a self-capacitance touch detection unit array, correspondingly, the touch detection units can be mutual touch detection units or self-capacitance capacitance touch detection units.

For example, the touch force can be divided into a plurality of different levels according to the force value, each of touch force levels corresponds to one or more force value ranges. For example, the touch force can be divided into a plurality of levels such as light touch, light press, heavy press and the like, the force value corresponding to the light touch, the force value corresponding to the light press and the force value corresponding to the heavy press increase in turn. For example, a force value range corresponding to the light touch is (a, b), a force value range corresponding to the light press is (c, d), a force value range corresponding to the heavy press is (e, f), then a< b< c <d <e <f, and a, b, c, d, e, f are all greater than zero.

For example, according to the different touch force levels, users can set different or the same operation instructions independently, or the different or the same operation instructions can be set by a system automatically, thereby completing the corresponding force touch operation.

For example, if an operation object of the force touch is a video playing application program, the following force operation instructions can be preset: when the touch force level is the light touch, performing a video play/ pause operation; when the touch force level is the light press, performing a video fast forward operation; when the touch force level is the heavy press, performing a video rewind operation. For example, if a touch force signal corresponding to a case that the touch force level is the light touch is received, then an operation instruction corresponding to a case that the touch force level is the light touch is performed, that is, when the video is playing, pausing the video, when the video is pausing, continuing to play the video. For another example, when editing a text, the light press corresponds to an operation of moving a cursor, and the heavy press corresponds to an operation of selecting a text for copying, deleting and the like.

For example, the size of the touch area is positively related to the magnitude of the touch force, that is, the larger the touch force is, the larger the touch area is, the more the number of the touch detection units touched in the corresponding touch detection unit array is. According to the size of the touch area when the touch detection unit array is touched, the corresponding level of the touch force can be determined, and the corresponding touch operation can be performed. For example, the operation object of the force touch is the video playing application program, the following touch area ranges and force operation instructions can be preset: the touch area range corresponding to the light touch being (0, A), performing the video play/ pause operation when the touch force level is the light touch; the touch area range corresponding to the light press being (A, B), performing the video fast forward operation when the touch force level is the light press; the touch area range corresponding to the heavy press being (B, C), performing the video rewind operation when the touch force level is the heavy press. When the touch operation on the touch detection unit array is detected, and the touch area is less than A, then the touch force signal corresponding to a case that the touch force level is the light touch is output, and the video play/pause operation is performed; if the touch area is greater than A and less than B, then the touch force signal corresponding to a case that the touch force level is the light press is output, and the video fast forward operation is performed; if the touch area is greater than B and less than C, then the touch force signal corresponding to a case that the touch force level is the heavy press is output, and the video rewind operation is performed.

It should be noted that, the division of the touch force described above is a schematic illustration, the touch force is not limited to divide into the light touch, the light press and the heavy press, for example, the touch force can further be divided. For example, the touch force can also be further divided into light press in a light level, light press in a middle level, light press in a heavy level and so on, the touch force value corresponding to the light press in a light level, the touch force value corresponding to the light press in a middle level or the touch force value corresponding to the light press in a heavy level increase in turn, and the corresponding touch areas also increase in turn.

For example, the touch detection units can be capacitance touch detection units. The capacitance touch detection units can generate touch capacitance data when the capacitance touch detection units are touched, the touch area can be characterized by the feature parameter of the three-dimensional waveform of the touch capacitance data. As illustrated in Fig. 2b, an example of the step S02 can include:
Step S021: acquiring the three-dimensional waveform of the touch capacitance data when the touch detection unit array is touched.
Step S022: determining the feature parameter of the three-dimensional waveform, the touch areas being characterized by the feature parameter.
Step S023: judging the size of the touch areas, and outputting the corresponding touch force signals.

For example, in the step S023, when the touch area is larger, a signal characterizing that the touch force is larger is output, and when the touch area is smaller, a signal characterizing that the touch force is smaller is output.

It should be noted that, for example, for the first touch force and the second touch force, the touch area formed by the first touch force is smaller, and the touch area formed by the second touch force is larger. That is, the touch area formed by the first touch force is less than the touch area formed by the second touch force.

Fig. 3a illustrates a view of a three-dimensional waveform of touch capacitance data.

For example, the touch detection unit array includes a plurality of touch detection units arranged in multiple lines and multiple columns, the touch detection units are capacitance touch detection units. When the touch operation is occurred, as illustrated in Fig. 3a, the finger is in contact with the touch screen, the capacitance value of the touched position in the capacitance touch detection units changes, so that a protrusive three-dimensional waveform corresponding to the force applied is formed in a virtual space. According to the difference touch force, the variation of the capacitance value of each of the capacitance touch detection units is also different, the formed three-dimensional waveform is also different, so that at least one feature parameter of the three-dimensional waveform can be used to characterize the magnitude of the touch force. For example, the three-dimensional waveform can have a shape of a wave crest, and a center position (the highest position) of the wave crest corresponding to a center position of the touched position.

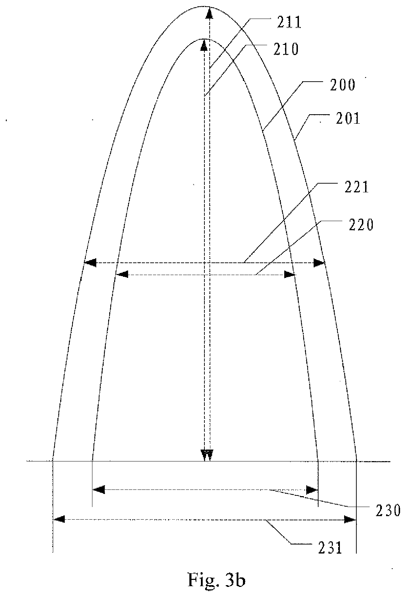

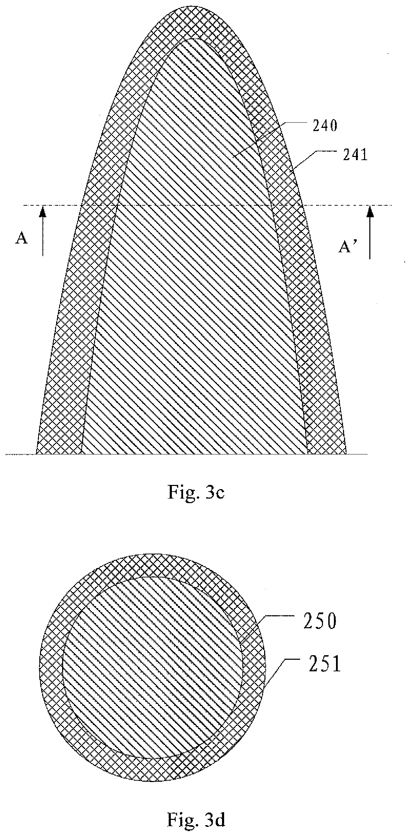

For example, Fig. 3b to Fig. 3c illustrate views of a feature parameter of a three-dimensional waveform provided by an embodiment of the present disclosure, and Fig. 3d is a view of a horizontal section of the three-dimensional waveform in a line A-A' direction in Fig. 3c.

For example, in the step S022, the feature parameter of the three-dimensional waveform can include a vertical section parameter and a horizontal section parameter. As illustrated in Fig. 3b to Fig. 3c, the vertical section parameter includes, but is not limited to, a waveform full width at half maximum 220 (221), a waveform peak value 210 (211), a waveform width 230 (231), a waveform area 240 (241) or waveform integral (not illustrated in Fig. 3b to Fig. 3c). As illustrated in Fig. 3d, the horizontal sectional parameter can include a waveform horizontal section area 250 (251), for example, the waveform horizontal section area 250 (251) can be the waveform horizontal section area of the full width at half maximum. The touch area is characterized by at least one of the waveform full width at half maximum 220 (221), the waveform peak value 210 (211), the waveform width 230 (231), the waveform area 240 (241) and the waveform horizontal section area 250 (251).

For example, the waveform full width at half maximum 220, the waveform horizontal section area 250, the waveform peak value 210, the waveform width 230and the waveform area 240under the first touch force are less than the corresponding waveform full width at half maximum 221, the corresponding waveform horizontal section area 251, the corresponding waveform peak value 211, the corresponding waveform width 231 and the waveform area 241 under the second touch force. The touch area can be characterized by any one of the abovementioned feature parameters of the three-dimensional waveform, and can also be comprehensively characterized by abovementioned multiple feature parameters of the three-dimensional waveform, so as to obtain a more accurate correspondence relationship between the touch area and the touch force. For example, the touch area can be characterized by the data of the waveform full width at half maximum and the waveform horizontal section area. In an example, under the first touch force, the three-dimensional waveform has the first waveform horizontal section area 250 and the first waveform full width at half maximum 220; under the second touch force, the three-dimensional waveform has the second waveform horizontal section area 251 and the second waveform full width at half maximum 221. Then, when the first waveform horizontal section area 250 is less than the second waveform horizontal section area 251, and the first waveform full width at half maximum 220 is less than the second waveform full width at half maximum 221, which indicates that the touch area formed by the first touch force is less than the touch area formed by the second touch force. But the present disclosure is not limited thereto, weights for the horizontal section area and the waveform full width at half maximum can be set respectively, and the size of the touch area is judged based on the weighted summation of the horizontal section area and the waveform full width at half maximum.

For example, the feature parameters of the three-dimensional waveform can be calculated by various methods such as an iterative algorithm method, a statistical histogram analysis method, a Fourier transform method, or a nonlinear least-square method.

It should be noted that, reasons of changes in the touch area include situations like force touch, multi-finger touch or palm touch and so on, therefore in the embodiments of the present disclosure, in order to achieve the force touch detection and operation, the abovementioned situations like the multi-finger touch or palm touch need to be excluded. In the force touch detection method of an embodiment of the present disclosure, as illustrated in Fig. 2b, an example of the step S201 can further include detecting whether the three-dimensional waveform is a continuous waveform or not and whether coordinates of the three-dimensional waveform are significantly moved or not. When the three-dimensional waveform is a continuous waveform and the coordinates of the three-dimensional waveform are not significantly moved, the step S022 is performed; when the three-dimensional waveform is not a continuous waveform and/ or the coordinates of the three-dimensional waveform are significantly moved, corresponding other functions are performed, for example, when two fingers are used for the touch operation to achieve multi-touch, the touch capacitance data has two divided three-dimensional waveforms, when the two divided three-dimensional waveforms move away from each other, the operation of enlarging an image may be performed, and when the two three-dimensional waveforms move relatively close to each other, the operation of zooming out the image may be performed; when the three-dimensional waveform is not a continuous waveform and/ or the coordinates of the three-dimensional are significantly moved, and the three-dimensional waveform has no corresponding operation instructions, no operation is performed or an incorrect operation instruction is output.

It should be noted that, the type of the current touch operation can be divided according to the level of the touch force, for example, the type of the current touch operation can include a light touch operation, a light press touch operation and a heavy press touch operation and so on, which respectively correspond to the level of the touch force being the light touch, the light press or the heavy press, but the present disclosure is not limited thereto.

A force touch detection method provided by at least one embodiment of the present disclosure includes such as storing the touch area detected when the first touch operation is performed on the touch operation device (such as a mobile phone, a tablet computer, a laptop and so on) as the touch characteristic data (for example, the touch characteristic data is stored as the data corresponding to the light press), in the following touch operation, the touch area of the current touch operation is detected and compared with the touch characteristic data, the type of the current touch operation is determined according to a comparison result, a touch force signal corresponding to the type of the current touch operation is output, and the corresponding operation is performed. Or, when the force touch function of the touch operation device is used, an input program of the touch characteristic data can be performed, for example, the touch characteristic data corresponding to different force levels can be respectively inputted. For example, these touch characteristic data, such as the touch characteristic data corresponding to the light press, the second touch characteristic data corresponding to the heavy press and so on, are used for the force touch detection in the use of the touch operation device later.

For example, a force touch detection method provided by an embodiment of the present disclosure can be applied to a public device, and can also be applied to a personal device.

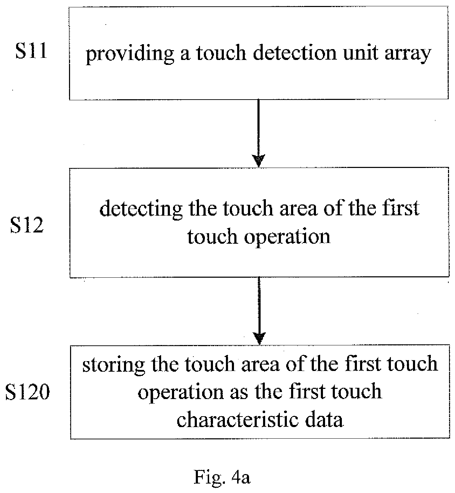

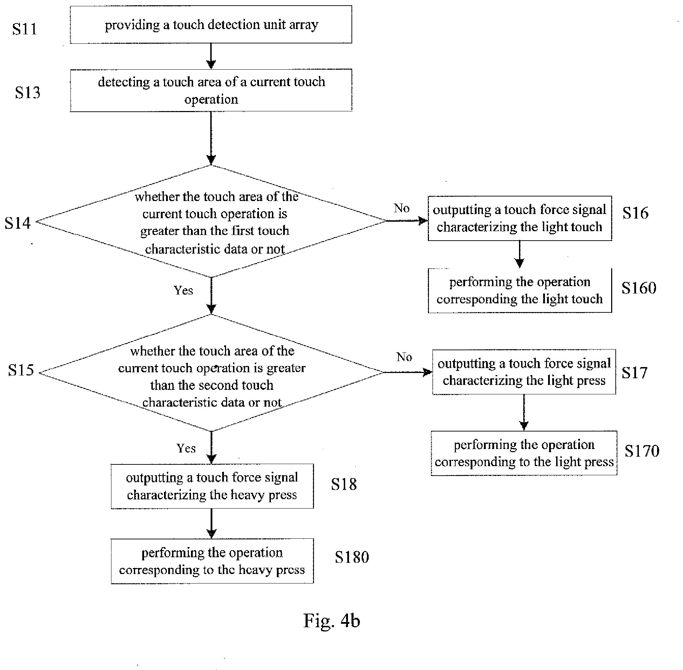

Fig. 4a to Fig.4b illustrate flow charts of a force touch detection method provided by an embodiment of the present disclosure. Hereinafter, the force touch detection method provided by an embodiment of the present disclosure is described in detail with reference to Figs. 4a and 4b.

As illustrated in Fig. 4b, in a case that the touch operation device stores the first touch characteristic data corresponding to a light touch threshold and the second touch characteristic data corresponding to a light press threshold, a force touch detection method provided by an embodiment of the present disclosure includes:
Step S11: providing a touch detection unit array.
Step S13: detecting a touch area of a current touch operation.
Step S14: judging whether the touch area of the current touch operation is greater than the first touch characteristic data or not.

If the touch area of the current touch operation is not greater than the first touch characteristic data, performing step S16: outputting a touch force signal characterizing the light touch; and then performing step S160: performing the operation corresponding the light touch.

If the touch area of the current touch operation is greater than the first touch characteristic data, performing step S15: judging whether the touch area of the current touch operation is greater than the second touch characteristic data or not.

If the touch area of the current touch operation is not greater than the second touch characteristic data, performing step S17: outputting a touch force signal characterizing the light press; and then performing step S170: performing the operation corresponding to the light press. If the touch area of the current touch operation is greater than the second touch characteristic data, performing step S18: outputting a touch force signal characterizing the heavy press; and then performing step S180: performing the operation corresponding to the heavy press.

For example, the first touch characteristic data, the second touch characteristic data and the touch area of the current touch operation can be characterized by the same feature parameter of the three-dimensional waveform. For example, the first touch characteristic data and the second touch characteristic data can be characterized by the waveform full width at half maximum 220 (221), the corresponding touch area of the current touch operation can also be characterized by the waveform full width at half maximum 220 (221); or, the first touch characteristic data and the second touch characteristic data can be characterized by the waveform horizontal sectional area 250 (251), the corresponding touch area of the current touch operation can also be characterized by the waveform horizontal sectional area 250 (251).

For example, the operation instructions of the first touch characteristic data, the second touch characteristic data and different touch force levels can be pre-stored in a storage device of a public device or a personal device. For example, the light touch area threshold corresponding to the case that the touch force level is the light touch can be obtained according to the statistics, and the statistical average of the light touch area threshold is taken as the first touch characteristic data; the light press area threshold corresponding to the case that the touch force level is the light press can be obtained according to the statistics, and the statistical average of the light press area threshold is taken as the second touch characteristic data. For example, the operation object of the force touch is a video playing application program, it can be preset: when the force touch level is the light touch, a video play/ pause operation is performed; when the force touch level is the light press, a video fast forward operation is performed; when the force touch level is the heavy touch, a video rewind operation is performed. Therefore, when the touch area of the current touch operation is less than the first touch characteristic data, the touch force signal corresponding to the case that the touch force level is the light touch is output, and the video play/pause operation is performed; when the touch area of the current touch operation is greater than the first touch characteristic data and less than the second touch characteristic data, the touch force signal corresponding to the case that the touch force level is the light press is output, and the video fast forward operation is performed; when the touch area of the current touch operation is greater than the second touch characteristic data, the touch force signal corresponding to the case that the touch force level is the heavy press is output, and the video rewind operation is performed.

It should be noted that, according to an example of the force touch detection method, before the step S14, the method can further include detecting whether the three-dimensional waveform is a continuous waveform or not and whether coordinates of the three-dimensional waveform are significantly moved or not. When the three-dimensional waveform is a continuous waveform and the coordinates of the three-dimensional waveform are not significantly moved, the step S14 is performed; when the three-dimensional waveform is not a continuous waveform and/ or the coordinates of the three-dimensional waveform are significantly moved, corresponding other functions are performed, for example, when two fingers are used for the touch operation to achieve multi-touch, the touch capacitance data has two divided three-dimensional waveforms, when the two three-dimensional waveforms move away from each other, the operation of enlarging an image may be performed, and when the two three-dimensional waveforms move relatively close to each other, the operation of zooming out the image may be performed; when the three-dimensional waveform is not a continuous waveform and/ or the coordinates of the three-dimensional are significantly moved, and the three-dimensional waveform has no corresponding operation instruction, no operation is performed or an incorrect operation instruction is output.

As illustrated in Fig. 4a, before the step S13, the force touch detection method provided by an embodiment of the present disclosure can further include:
Step S12: detecting the touch area of the first touch operation.
Step S120: storing the touch area of the first touch operation as the first touch characteristic data.

For example, the first touch characteristic data can be stored into the storage device of the public device or the personal device.

For example, the first touch characteristic data may be the touch area corresponding to an original force value of the first touch operation on the public device or the personal device. For example, a corresponding relationship between the second touch characteristic data and the first touch characteristic can be preset in the system, when the first touch characteristic data is obtained, the second characteristic data can be obtained by a sample calculation. For example, a case that the second touch characteristic data is 1.5 times of the first touch characteristic data can be preset in the system, after obtaining the first touch characteristic data, the second touch characteristic data can be obtained in a case that the first touch characteristic data multiplies by the coefficient 1.5, and the second touch characteristic data can also be stored into the storage device of the public device or the personal device.

For example, the touch area of the first touch operation can be set to corresponding to a case that the touch force level is the light touch, the touch area of the first touch operation can also be set to corresponding to a case that the touch force level is the light press or the heavy press, and then the other touch force levels may be determined through the change of the three-dimensional waveform.

For example, the force value of the first touch operation when the public device is used can be regarded as the light touch, and the corresponding touch area is stored as the first touch characteristic data; if the force increases, the touch area increases, when the touch area is greater than 1.1 times of the first touch characteristic data, the touch operation is regarded as the light press; if the force continues to increase, the touch area continues to increase, when the touch area is greater than 1.3 times of the first touch characteristic data, the touch operation is regarded as the heavy press.

A force touch detection method of another embodiment of the present disclosure includes inputting the touch areas when the user lightly touches, lightly presses and heavily presses the touch operation device (such as a mobile phone, a tablet computer, a laptop and so on), respectively, and storing the touch areas as the touch characteristic data, in the following touch operation, the touch area of the current touch operation is detected and compared with the touch characteristic data, the type of the current touch operation is determined according to the comparison result, the touch force signal corresponding to the type of the current touch operation is output, and the corresponding operation is performed.

For example, a force touch detection method provided by another embodiment of the present disclosure can be applied to the personal device, and can also be applied to the public device.

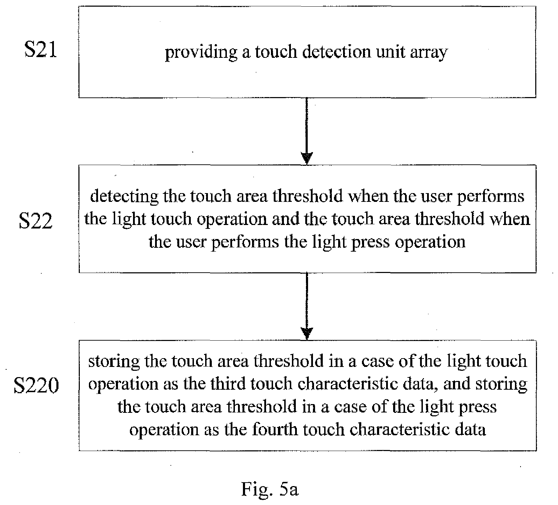

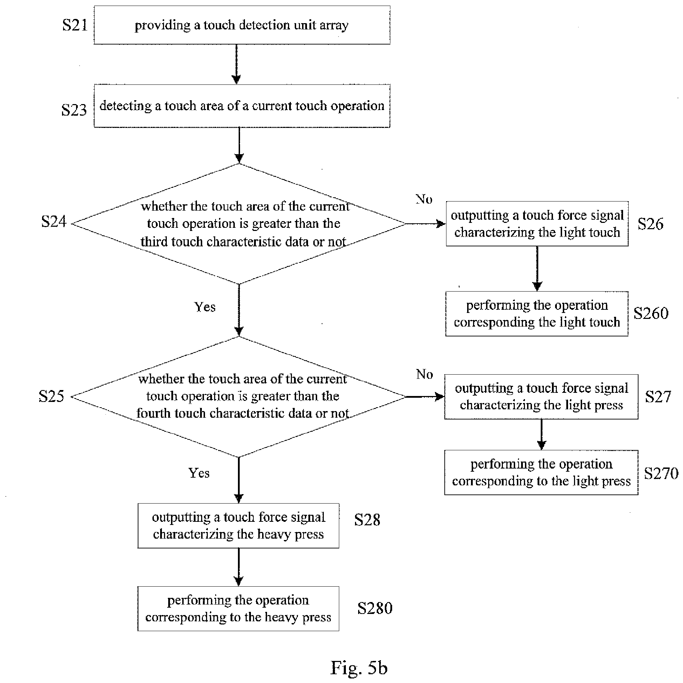

Fig. 5a to Fig.5b illustrate flow charts of a force touch detection method provided by another embodiment of the present disclosure. Hereinafter, the force touch detection method provided by an embodiment of the present disclosure is described in detail with reference to Figs. 5a and 5b.

As illustrated in Fig. 5b, in a case that the touch operation device stores the third touch characteristic data corresponding to a light touch threshold and the fourth touch characteristic data corresponding to a light press threshold, a force touch detection method provided by another embodiment of the present disclosure includes:
Step S21: providing a touch detection unit array.
Step S23: detecting a touch area of a current touch operation.
Step S24: judging whether the touch area of the current touch operation is greater than the third touch characteristic data or not.

If the touch area of the current touch operation is not greater than the third touch characteristic data, performing step S26, that is, outputting a touch force signal characterizing the light touch; and then performing step S260: performing the operation corresponding the light touch.

If the touch area of the current touch operation is greater than the third touch characteristic data, performing step S25: judging whether the touch area of the current touch operation is greater than the fourth touch characteristic data or not.

If the touch area of the current touch operation is not greater than the fourth touch characteristic data, performing step S27: outputting a touch force signal characterizing the light press; and then performing step S270: performing the operation corresponding to the light press. If the touch area of the current touch operation is greater than the fourth touch characteristic data, performing step S28: outputting a touch force signal characterizing the heavy press; and then performing step S280: performing the operation corresponding to the heavy press.

For example, the third touch characteristic data, the fourth touch characteristic data and the touch area of the current touch operation can be characterized by the same feature parameter of the three-dimensional waveform. For example, the third touch characteristic data and the fourth touch characteristic data can be characterized by the waveform full width at half maximum 220 (221), the corresponding touch area of the current touch operation can also be characterized by the waveform full width at half maximum 220 (221);or, the third touch characteristic data and the fourth touch characteristic data can be characterized by the waveform horizontal sectional area 250 (251), the corresponding touch area of the current touch operation can also be characterized by the waveform horizontal sectional area 250 (251).

For example, the operation instructions of the third touch characteristic data, the fourth touch characteristic data and different touch force levels can be pre-stored in a storage device of a public device or a personal device. For example, the light touch area threshold corresponding to the case that the touch force level is the light touch can be obtained according to the statistics, and the statistical average of the light touch area threshold is taken as the third touch characteristic data; the light press area threshold corresponding to the case that the touch force level is the light press can be obtained according to the statistics, and the statistical average of the light press area threshold is taken as the fourth touch characteristic data. For example, the operation object of the force touch is a video playing application program, it can be preset: when the force touch level is the light touch, a video play/ pause operation is performed; when the force touch level is the light press, a video fast forward operation is performed; when the force touch level is the heavy touch, a video rewind operation is performed. Therefore, when the touch area of the current touch operation is less than the third touch characteristic data, the touch force signal corresponding to the case that the touch force level is the light touch is output, and the video play/pause operation is performed; when the touch area of the current touch operation is greater than the third touch characteristic data and less than the fourth touch characteristic data, the touch force signal corresponding to the case that the touch force level is the light press is output, and the video fast forward operation is performed; when the touch area of the current touch operation is greater than the fourth touch characteristic data, the touch force signal corresponding to the case that the touch force level is the heavy press is output,, and the video rewind operation is performed.

As illustrated in Fig. 5a, before the step S23, the force touch detection method provided by another embodiment of the present disclosure can further include:
Step S22: detecting the touch area threshold when the user performs the light touch operation and the touch area threshold when the user performs the light press operation.
Step S220: storing the touch area threshold in a case of the light touch operation as the third touch characteristic data, and storing the touch area threshold in a case of the light press operation as the fourth touch characteristic data.

For example, the third touch characteristic data and the fourth touch characteristic data can be stored into the storage device of the public device or the personal device.

For example, when the force touch detection method is applied to the public device, the third touch characteristic data and the fourth touch characteristic data can be preset by the system of the public device; the touch area corresponding to a single touch operation can also be set as the third touch characteristic data and the fourth touch characteristic data when the public device is used. When the force touch detection method is applied to the personal device, the third touch characteristic data and the fourth touch characteristic data can be preset by the system of the personal device; the third touch characteristic data and the fourth touch characteristic data can also be personalized by the user in real time according to actual needs; the third touch characteristic data and the fourth touch characteristic data can also be set in a case that the personal device is used to count the operation habit of the user, and the touch area is automatically divided to correspond to different force touch levels respectively according to the statistical results, so as to correspond to different preset force operation instructions and to adapt to the actual operation requirements of the user as much as possible. For example, when the personal device is used for the first time, touch force habits of the user such as the light touch, the light press, the heavy press and so on are detected, and the corresponding touch areas are stored as preset touch force levels.

It should be noted that, before the step S24, the method provided by the embodiments of the present disclosure can further include detecting whether the three-dimensional waveform is a continuous waveform or not and whether the coordinates of the three-dimensional waveform are significantly moved or not, the corresponding steps can be referred to the relevant description in the abovementioned embodiments, and similar descriptions will be omitted here

For example, according to the levels of the touch force, the number of the touch characteristic data can be multiple to correspond to a plurality of different levels of the touch force. For example, when the touch force continuous to be divided into the light press in a light level, the light press in a middle level and the light press in a heavy level, the fifth touch characteristic data, the sixth touch characteristic data and the seventh touch characteristic data can be set, so as to store the touch area threshold in a case of the light press in the light level, the touch area threshold in a case of the light press in the middle level, and the touch area threshold in a case of the light press in the heavy level respectively. The present disclosure is not limited thereto.

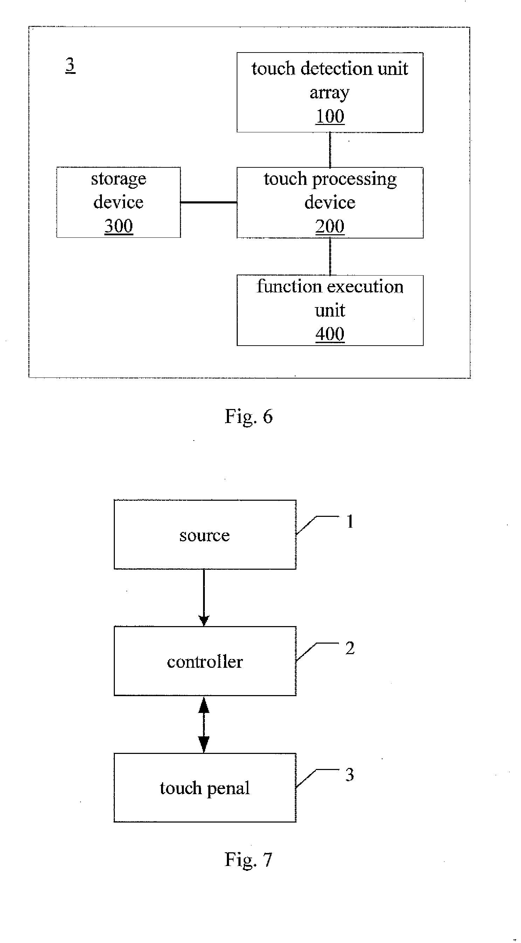

Fig. 6 is a block diagram of a touch panel provided by an embodiment of the present disclosure.

The touch panel 3 provided by at least one embodiment of the present disclosure includes a touch detection unit array 100, a touch processing device 200, a storage device 300 and a function execution unit 400. The touch panel 3 can use the size of the touch area to characterize the magnitude of touch force, so as to implement force touch detection, thereby eliminating the need for an additional force sensor, simplifying the preparation process of the touch panel, improving the yield of the product, reducing the production cost of the touch panel and realizing the lightness and thinness of the touch panel.

For example, the touch detection unit array 100 includes touch detection units arranged in multiple lines and multiple columns, the touch detection units can be various types of touch detection units, such as self-capacitance touch detection units or mutual capacitance touch detection units. The storage device 300 is configured to store the touch characteristic data and force touch operation instructions and the like. The touch processing device 200 is configured to detect a touch area of the current touch operation and compare the touch area of the current touch operation to the touch characteristic data, and output different touch force signals according to the comparative result. The touch processing device can be implemented using such as hardware, software, firmware, or any combination thereof, for example, the touch processing device can be implemented by an integrated circuit. The function execution unit 400 is configured to perform the corresponding force touch operation according to the touch force signals, the function execution unit can be implemented using such as hardware, software, firmware, or any combination thereof, and for example, the function execution unit can be implemented by an integrated circuit.

It should be noted that, the division of the touch area and the touch force levels, the touch characteristic data and the like can be the same as the division in the embodiments of the abovementioned force touch detection method, which is not repeated herein.

For example, the touch detection unit array 100 may include a plurality of capacitance touch detection units arranged in multiple lines and multiple columns. When receiving the touch operation, a touched position in the capacitance touch detection units can generate touch capacitance data, that is, the capacitance value of the touched position changes to form a protrusive three-dimensional waveform. According to the difference touch force, the three-dimensional waveforms formed by different touch force are different, thereby, at least one of the feature parameters of the three-dimensional waveform can be used to characterize the magnitude of the touch force.

For example, the touch area can be characterized by one or more feature parameters of the three-dimensional waveform of the touch capacitance data. For example, the feature parameters of the three-dimensional waveform can include a waveform full width at half maximum, a waveform horizontal section area, a waveform peak value, a waveform width and waveform integral and so on.

For example, the touch characteristic data can be the touch area of the first touch operation. For another example, the touch characteristic data can also include the touch areas when the user lightly touches, lightly presses and heavily presses the touch detection units, respectively.

For example, when the touch panel 3 is applied to a public device, the touch characteristic data can be preset by the system; the touch characteristic data can also be characterized by the detected touch area of a single touch operation performed on the public device. When the touch panel 3 is applied to a personal device, the touch characteristic data can be preset by the system; the touch characteristic data can also be personalized by the user in real time according to actual needs; the touch characteristic data can also be set in a case that the personal device is used to count the operation habit of the user, and the touch area is automatically divided to correspond to different force touch levels respectively according to the statistical results, so as to correspond to different preset force operation instructions and to adapt to the actual operation requirements of the user as much as possible.

For example, the touch panel 3 can be a rectangular touch panel, a circle touch panel, an oval touch panel or a polygon touch panel and the like.

For example, the storage device can be, for example, various types of storage devices, such as a volatile storage device or a non-volatile storage device, such as a magnetic storage device or a semiconductor storage device and so on, more specifically, the storage device can include a memory card of a mobile phone, a storage component of a tablet computer, a hard disk of a personal computer, a magnetic disk, a compact disc, a random access memory (RAM),a read only memory (ROM), an erasable programmable read only memory (EPROM),a static random access memory (SRAM), portable compact disk read-only memory (CD-ROM), USB memory, or any combination of the above storage media.

Fig. 7 illustrates a block diagram of an electronic device provided by an embodiment of the present disclosure.

The electronic device provided by at least one embodiment of the present disclosure includes a source 1, a controller 2 and the touch penal 3 described in any one of the abovementioned embodiments.

For example, the touch panel 3 is configured to receive touch operations, generate touch capacitance data, and determine touch areas according to the touch capacitance data, and then form different touch force signals according to the touch areas, perform different or the same touch operation. For example, when the touch area is larger, a signal characterizing that the touch force is larger is formed, and an operation instruction characterizing that the touch force is larger is performed; when the touch area is smaller, a signal characterizing that the touch force is smaller is formed, and an operation instruction characterizing that the touch force is smaller is performed.

For example, the controller 2 is configured to control an overall operation of the electronic device. For example, the controller 2 can control the detection of the touch area, the formation of the touch force signals and the execution of the touch operation instructions and the like in the touch panel 3.

For example, the source 1 is configured to provide power required for operation to each module in the electronic device under the control of the controller 2, the source 1 can be an external DC or AC power, or a battery, such as a primary battery or a secondary battery. For example, when the touch panel 3 is used in a liquid crystal display device, the source 1 can provide the required power to a backlight source in the liquid crystal display device.

For example, the electronic device provided by at least one embodiment of the present disclosure further includes a display panel. The touch panel 3 can be disposed on a display side of the display panel, in this case, the touch panel and the display panel can be respectively independently manufactured, and then assembled together. Alternatively, the touch panel can share some parts with the display panel, for example, the touch panel can be partially or completely formed on a substrate in the display side of the display panel. Or, the touch panel 3 can also be formed integrally with the display panel, for example, the touch panel can be formed in the display panel in an embedded manner.

For example, the display panel can include a liquid crystal display panel, an organic light emitting diode display panel, a flexible display panel, a three-dimensional display panel and so on.

For example, the electronic device can be any product or component with a force touch function such as a television, a digital camera, a mobile phone, a watch, a tablet computer, a notebook computer, or a navigator.

It should be noted that, in order to describe clearly, the entire structure of the electronic device is not described in detail. In order to achieve the necessary functions of the electronic device, a personal having ordinary skill in the art can dispose other non-described structures according to a specific application scene, and the present disclosure is not limited thereto.

At least one of the present disclosure provides a force touch detection method, a touch panel and an electronic device, which integrates a force touch function in a touch panel, utilizes a phenomenon that touch area changes when different force touch operations are performed, and uses a size of the touch area to characterize a magnitude of touch force to implement force touch detection, thereby eliminating the need for an additional force sensor, simplifying the preparation process of the force touch panel, improving the yield of the product, reducing the production cost of the force touch technology and realizing the lightness and thinness of the electronic device.

For the present disclosure, the following statements should be noted:
(1) The accompanying drawings involve only the structure(s) in connection with the embodiment(s) of the present disclosure, and other structure(s) can be referred to common design(s).
(2) In the absence of conflict, the embodiments of the present disclosure and the features in the embodiment(s) can be combined with each other to obtain new embodiment(s).

What have been described above are only specific implementations of the present disclosure, however the protection scope of the present disclosure is not limited thereto, and the protection scope of the present disclosure should be based on the protection scope of the claims.

## Claims

1. A force touch detection method, comprising:
providing a touch detection unit array, which comprises touch detection units arranged in multiple lines and multiple columns ; and
detecting touch areas when the touch detection unit array is touched, and outputting different touch force signals according to the touch areas.

2. The force touch detection method according to claim 1, wherein the touch detection units are capacitance touch detection units, the capacitance touch detection units generate touch capacitance data when the capacitance touch detection units are touched, the method comprises:
determining a feature parameter of a three-dimensional waveform of the touch capacitance data, the touch areas being **characterized by** the feature parameter,
wherein the feature parameter comprises at least one of a waveform full width at half maximum, a waveform horizontal section area, a waveform peak value, a waveform width, and waveform integral of the three-dimensional waveform.

3. The force touch detection method according to claim 1 or 2, further comprising:
taking a touch area of a first touch operation as touch characteristic data,
detecting a touch area of a current touch operation and comparing the touch area of the current touch operation with the touch characteristic data,
determining a type of the current touch operation according to a comparison result, and
outputting a touch force signal corresponding to the type of the current touch operation in the different touch force signals.

4. The force touch detection method according to claim 1 or 2, further comprising:
storing touch areas when a user lightly touches, lightly presses and heavily presses the touch detection unit array, respectively, as touch characteristic data,
detecting a touch area of a current touch operation and comparing the touch area of the current touch operation with the touch characteristic data,
determining a type of the current touch operation according to a comparison result, and
outputting a touch force signal corresponding to the type of the current touch operation in the different touch force signals.

5. The force touch detection method according to claim 3 or 4, wherein the type of the current touch operation comprises a light touch operation, a light press touch operation and a heavy press touch operation.

6. A touch penal, comprising:
a touch detection unit array, which comprises touch detection units arranged in multiple lines and multiple columns; and
a touch processing device, configured to detect touch areas when the touch detection unit array is in a touched state, and output different touch force signals according to the touch areas.

7. The touch panel according to claim 6, wherein the touch detection units are self-capacitance touch detection units or mutual capacitance touch detection units.

8. The touch panel according to claim 6 or 7, wherein the touch detection units are configured to generate touch capacitance data, a feature parameter of a three-dimensional waveform of the touch capacitance data is used to characterize the touch areas, and
wherein the feature parameter comprises at least one of a waveform full width at half maximum, a waveform horizontal section area, a waveform peak value, a waveform width, and waveform integral of the three-dimensional waveform.

9. The touch panel according to any one of claims 6 to 8, further comprising a storage device, wherein the storage device is configured to store touch characteristic data.

10. The touch panel according to claim 9, wherein the touch characteristic data is a touch area in a case of a first touch operation, the touch processing device is further configured to detect a touch area of a current touch operation and compare the touch area of the current touch operation with the touch characteristic data, determine a type of the current touch operation according to a comparison result, and output a touch force signal corresponding to the type of the current touch operation in the different touch force signals.

11. The touch panel according to claim 9, wherein the touch characteristic data is touch areas when a user lightly touches, lightly presses and heavily presses the touch detection unit array, respectively, the touch processing device is further configured to detect a touch area of a current touch operation and compare the touch area of the current touch operation with the touch characteristic data, determine a type of the current touch operation according to a comparison result, and output a touch force signal corresponding to the type of the current touch operation in the different touch force signals.

12. An electronic device, comprising the touch panel according to any one of claims 6 to 11.

13. The electronic device according to claim 12, further comprising a display panel, wherein the touch panel is disposed on a display side of the display panel; or
the touch panel is formed integrally with the display panel.
